# EUROPÄISCHE PATENTSCHRIFT

(11) **EP 3 867 023 B1**
(45) Veröffentlichungstag und Bekanntmachung des Hinweises auf die Patenterteilung: **22.06.2022**
(21) Anmeldenummer: 20730372.8
(22) Anmeldetag: 08.05.2020
(51) Int. Cl.: B25J 15/04, B25J 19/00

(54) **WECHSELVORRICHTUNG**
CHANGE-OVER DEVICE
DISPOSITIF DE CHANGEMENT

(30) Priorität: 09.05.2019 AT 504192019
(43) Veröffentlichungstag der Anmeldung: 25.08.2021
(73) Patentinhaber: FACC AG, 4910 Ried im Innkreis (AT)
(72) Erfinder: LENGLACHNER, Wolfgang, 5280 Braunau am Inn (AT)
(74) Vertreter: SONN Patentanwälte OG
(86) Internationale Anmeldenummer: PCT/AT2020/060185
(87) Internationale Veröffentlichungsnummer: WO 2020/223752

(56) Entgegenhaltungen:
- JP-A- H0 639 763
- JP-A- H0 639 763
- US-A- 5 782 571
- US-A- 5 782 571
- US-A1- 2009 143 207
- US-A1- 2009 143 207

## Beschreibung

Die Erfindung betrifft eine Wechselvorrichtung insbesondere zum nichtzerstörenden Prüfen eines Bauteils, vorzugsweise eines Faser-Kunststoff-Verbund-Bauteils, aufweisend:
eine Wechselkupplung zur Verbindung eines Handhabungselements, insbesondere eines Roboterarms, mit einem Wechseladapter, und
- den Wechseladapter, der mit der Wechselkupplung lösbar verbunden ist, wobei die Wechsekupplung aufweist_
- ein Spannelement zum Verspannen mit einem korrespondierenden Spannelement am Wechseladapter,
- zumindest ein elektrisches, und/oder optisches Steckverbindungselement zur Verbindung mit zumindest einem korrespondierenden elektrischen und/oder optischen Steckverbindungselement am Wechseladapter.

Weiters betrifft die Erfindung eine Prüf- bzw. Bearbeitungsanlage mit einer solchen Wechselvorrichtung.

Bei derartigen Wechselvorrichtungen werden üblicherweise verschiedene Anschlüsse zur Verbindung mit korrespondierenden Anschlüssen am Wechseladapter benötigt, wie z.B. Steckverbindungen mit Hochspannungs- und/oder Hochstromkontakten, Hochfrequenzkontakten, hochpolige (160 Pins) Miniatur-Steckverbindungen und/oder Steckverbindungen für Lichtwellenleiter.

Aus der EP 1 590 134 ist eine Wechselkupplung bekannt, welche mit einem Wechseladapter verriegelt werden kann. Im verriegelten Zustand sind einander zugeordnete Medien- und Kommunikationsleitungen von Wechselkupplung und Wechseladapter, beispielsweise für Druckluft, Sensorsignale, Schweißstrom oder Kühlmittel, miteinander verbunden. Nachteilig ist jedoch, dass die elektrischen bzw. optischen Steckverbindungselemente beim Verbinden von Wechselkupplung und Wechseladapter präzise aneinander ausgerichtet werden müssen, um eine Beschädigung der empfindlichen elektrischen bzw. optischen Steckverbindungselemente zu verhindern.

WO 2015/074710 zeigt eine andersartige Ablagestation, in der eine werkzeugseitige Aufnahmeplatte und eine roboterseitige Aufnahmeplatte abgelegt werden können.

DE 11 2015 003 807 T5 beschreibt eine Mastereinheit zur Befestigung an einem Roboterarm und eine Werkzeugeinheit zur Befestigung an einem Roboterwerkzeug.

US 2016/059424 A1 offenbart ein Masterelement und ein Werkzeugelement.

Die US 2009/143207 A1 zeigt eine rekonfigurierbare Vorrichtung mit numerischer Steuerung für die Herstellung von Flugzeugbauteilen. Abnehmbare Komponenten bzw. Werkzeuge können mittels einer Steckverbindung verbunden werden. Es ist eine Kupplung vorgesehen, die Klemmen, Rohre und Drähte zur Verbindung aufweist. Aus der JP H06 39763 ist eine Kupplung zum automatischen Austausch von Tools bekannt, mit den Merkmalen des Oberbegriffes des Anspruches 1. Die Kupplung weist Anschlüsse für Luft, Öl oder Wasser und Pins für den elektrischen Anschluss auf. Es sind weitere Pins vorgesehen, die mit Führungssöffnungen zusammenwirken.

Ein weiterer Werkzeugwechsler ist aus der US 5 782 571 A bekannt.

Die Aufgabe der vorliegenden Erfindung besteht darin, zumindest einzelne Nachteile des Standes der Technik zu lindern bzw. zu beseitigen. Die Erfindung setzt sich insbesondere zum Ziel, die elektrischen bzw. optischen Steckverbindungselemente beim Anschließen des Wechseladapters zu schonen.

Diese Aufgabe wird durch eine Wechselvorrichtung mit den Merkmalen von Anspruch 1 und eine Prüf- bzw. Bearbeitungsanlage mit den Merkmalen von Anspruch 14 gelöst. Bevorzugte Ausführungsformen sind in den abhängigen Ansprüchen angegeben.

Die Erfindung sieht daher zwei Wasserkupplungselemente zur Verbindung mit zwei entsprechenden Wasserkupplungselementen am Wechseladapter vor, wobei die Wasserkupplungselemente weiter in Richtung der Verbindung mit dem Wechseladapter (d.h. in Längsrichtung bzw. axialer Richtung der Wechselkupplung) vorstehen als das elektrische und/oder optische Steckverbindungselement, so dass das elektrische und/oder optische Steckverbindungselement und das korrespondierende elektrische und/oder optische Steckverbindungselement am Wechseladapter vor ihrem Aufeinandertreffen durch das Verbinden der Wasserkupplungselemente mit den entsprechenden Wasserkupplungselementen am Wechseladapter aneinander ausgerichtet sind.

Somit werden die zwei Wasserkupplungselemente der Wechselkupplung beim Anschließen des Wechseladapters an die Wechselkupplung mit den korrespondierenden Wasserkupplungselementen am Wechseladapter verbunden, bevor die elektrischen bzw. optischen Steckverbindungselemente mit den korrespondierenden elektrischen bzw. optischen Steckverbindungselementen am Wechseladapter in Eingriff gebracht werden. Dadurch werden die korrespondierenden elektrischen bzw. optischen Steckverbindungselemente vor dem Ankuppeln des Wechseladapters an die Wechselkupplung aneinander ausgerichtet, d.h. in der bestimmungsgemäßen Drehlage bezüglich der Längsachse der Wechselkupplung zueinander angeordnet. Diese Ausführung bringt den Vorteil mit sich, dass eine Beschädigung der empfindlichen elektrischen bzw. optischen Steckverbindungselemente zuverlässig vermieden werden kann. Dies funktioniert sowohl bei einem manuellen, als auch bei einem automatisierten Wechselvorgang. Das Ankuppeln des Wechseladapters an die Wechselkupplung wird bei einem manuellen Wechselvorgang von einer Person und bei einem automatisierten Wechselvorgang automatisch von einem Roboter durchgeführt. Weiters ergibt sich der Vorteil, dass das Eindringen von Flüssigkeiten und Gasen aus einer Prüf- bzw. Bearbeitungsumgebung der Wechselkupplung in die Wasserkupplungselemente aufgrund der selbstdichtenden Funktion der weiter in Richtung der Verbindung mit dem Wechseladapter vorstehenden Wasserkupplungselemente erschwert wird. Dadurch wird eine Verunreinigung der Flüssigkeit, insbesondere des Wassers, in den Wasserkupplungselementen und den zugehörigen Flüssigkeitsleitungen, insbesondere Wasserleitungen, der Wechselkupplung und des Wechseladapters, erschwert oder verhindert.

Gemäß einer bevorzugten Ausführungsform weist ein Wechselvorgang die folgenden Schritte auf:
- Abnehmen eines benutzten Wechseladapters von der Wechselkupplung;
- Abtupfen und/oder Absaugen der Wasserkupplungselemente der Wechselkupplung und der Wasserkupplungselemente eines anzubringenden Wechseladapters zur Verhinderung eines Flüssigkeitseintrags in den Wechseladapter und/oder in die Wechselkupplung;
- Ausrichten der Wasserkupplungselemente der Wechselkupplung mit den korrespondierenden Wasserkupplungselementen am anzubringenden Wechseladapter;
- Verbinden der Wasserkupplungselemente der Wechselkupplung mit den korrespondierenden Wasserkupplungselementen am anzubringenden Wechseladapter; und
- In Eingriff bringen der elektrischen bzw. optischen Steckverbindungselemente mit den korrespondierenden elektrischen bzw. optischen Steckverbindungselementen am anzubringenden Wechseladapter.

Ein Flüssigkeitseintrag beim Kuppeln bzw. Abkuppeln wird durch die Wasserkupplungselemente zuverlässig vermieden. Eine Kontamination der elektrischen bzw. optischen Steckverbindungselemente durch fallweise auftretende Tropfenbildung an den Kontaktflächen der Wasserkupplungselemente wird durch die Vorlagerung bzw. Versenkung der Kontaktflächen der Wasserkupplungselemente der Wechselkupplung bzw. des Wechseladapters verhindert.

Die Wechselkupplung weist bevorzugt einen Grundkörper auf, welcher auf der dem Wechseladapter zugewandten Stirnseite eine vorzugsweise im Wesentlichen senkrecht zur Längsachse der Wechselkupplung erstreckte Hauptverbindungsfläche aufweist, die im verbundenen Zustand an einer korrespondierenden Hauptverbindungsfläche des Wechseladapters anliegt. Die elektrischen und/oder optischen Steckverbindungselemente stehen im Vergleich zu den Wasserkupplungselementen weniger weit in Richtung der Längsachse der Wechselkupplung vor, so dass die korrespondierenden elektrischen und/oder optischen Steckverbindungselemente in der bestimmungsgemäßen Orientierung zueinander ausgerichtet sind, wenn die korrespondierenden Hauptverbindungsflächen von Wechselkupplung und Wechseladapter miteinander in Kontakt kommen.

Für die Zwecke dieser Offenbarung beziehen sich die Orts- und Richtungsangaben auf die Längsachse der Wechselkupplung, welche mit der Richtung des bestimmungsgemäßen Verbindens von Wechselkupplung und Wechseladapter zusammenfällt. Dabei bezieht sich "axial" auf die Richtung der Längsachse und "radial" auf die Richtung normal zur Längsachse der Wechselkupplung.

Gemäß einer bevorzugten Ausführungsform weist die Wechselkupplung ein Drehsicherungselement zur Verbindung mit einem korrespondierenden Drehsicherungselement am Wechseladapter auf, wobei als Drehsicherungselement bevorzugt ein in Richtung der Verbindung mit dem Wechseladapter verjüngter Verbindungszapfen und als korrespondierendes Drehsicherungselement am Wechseladapter eine Zapfenaufnahme vorgesehen ist. Vorteilhafterweise kann das Drehsicherungselement aufgrund der ebenfalls eine Drehsicherung bewirkenden Verbindung zwischen den korrespondierenden Wasserkupplungselementen kleiner dimensioniert werden als bei Wechselkupplungen mit Flüssigkeitskupplungselementen ohne Drehmomentaufnahme. Ein weiterer Vorteil der Drehsicherungselemente ist es, dass so die Wechselkupplung noch genauer mit dem Wechseladapter ausgerichtet werden kann.

Besonders bevorzugt ist es, wenn die Wasserkupplungselemente der Wechselkupplung der Wechselvorrichtung einen größeren radialen Abstand zum Spannelement aufweisen als das Drehsicherungselement. Durch diese Anordnung nehmen die Wasserkupplungselemente bei Verdrehung des Wechseladapters gegenüber der Wechselkupplung ein größeres Drehmoment auf als das Drehsicherungselement, wodurch eine kleinere Dimensionierung des Drehsicherungselements ermöglicht wird.

Um das zumindest eine elektrische und/oder optische Steckverbindungselement und die Wasserkupplungselemente vor äußeren Einflüssen zu schützen, ist es günstig, wenn die Wechselkupplung einen Dichtungsring zur dichtenden Verbindung mit dem Wechseladapter aufweist, wobei der Dichtungsring bevorzugt einen V-förmigen Querschnitt aufweist. Aufgrund des V-förmigen Querschnitts kann Flüssigkeit der Umgebung, die sich an der Außenseite der Wechselkupplung ansammelt, abtropfen, so dass das elektrische und/oder optische Steckverbindungselement und die Wasserkupplungselemente vor der an der Außenseite der Wechselkupplung angesammelten Flüssigkeit geschützt sind.

Gemäß einer bevorzugten Ausführungsform ist der Dichtungsring an einem (umfangseitigen) Außenrand eines vorzugsweise zylindrischen Grundkörpers der Wechselkupplung angeordnet.

Gemäß einer bevorzugten Ausführungsform sind das elektrische und/oder optische Steckverbindungselement und die Wasserkupplungselemente jeweils in radialer Richtung gesehen innerhalb des Dichtungsrings angeordnet. Im verbundenen Zustand erstreckt sich der Dichtungsring an den aufeinandertreffenden Stirnseiten von Wechselkupplung und Wechseladapter, wobei die korrespondierenden elektrischen und/oder optischen Steckerverbindungselemente sowie die Flüssigkeitsverbindung innerhalb des Dichtungsrings geschützt angeordnet sind.

Besonders bevorzugt weist der Grundkörper zumindest eine erste Aussparung zur lösbaren Anordnung des elektrischen und/oder optischen Steckverbindungselements und/oder zumindest eine zweite Aussparung zur lösbaren Anordnung des Flüssigkeitskupplungselements auf. In Gebrauch sind das elektrische und/oder optische Steckverbindungselement innerhalb der ersten Aussparung bzw. das Flüssigkeitskupplungselement innerhalb der zweiten Aussparung angeordnet und jeweils mit der zugehörigen Leitung vom Handhabungselement verbunden.

Gemäß einer bevorzugten Ausführungsform weist die Wechselkupplung ein Kupplungselement für Luft, insbesondere Druckluft, zur Verbindung mit einem entsprechenden Kupplungselement für Luft, insbesondere Druckluft, am Wechseladapter, auf. Die Druckluft kann von einem am Wechseladapter montierten Werkzeug zu dessen zweckmäßigem Einsatz verwendet werden. Die Druckluft wird im Einsatz insbesondere für eines von pneumatischer Hubzylinder, Abblasvorrichtung, Sperrluft oder pneumatischer Kollisionsschutz genutzt.

Gemäß einer bevorzugten Ausführungsform ist das zumindest eine elektrische Steckverbindungselement elektrisch isoliert von der Wechselkupplung. Besonders bevorzugt ist das zumindest eine elektrische Steckverbindungselement einzeln geerdet. Dies wirkt sich insbesondere auf die elektromagnetische Verträglichkeit benachbarter elektrischer Komponenten aus. Dies ist speziell bei Hochfrequenzanwendungen von Bedeutung.

Um eine Tragkraft der Wechselkupplung zu reduzieren, ist es günstig, wenn das zumindest eine elektrische Steckverbindungselement radial gefedert ist. Die Tragkraft der Wechselkupplung bleibt somit unabhängig von der Art und der Anzahl der elektrischen Steckverbindungselemente.

Gemäß einer bevorzugten Ausführungsform weist zumindest ein elektrisches Steckverbindungselement der Wechselkupplung Hochspannungs- bzw. Hochstromkontakte auf. In diesem Zusammenhang bedeutet Hochspannung eine elektrische Spannung mit mindestens 680 Volt Gleichstrom und Hochstrom eine elektrische Stromstärke von mindestens 25 Ampere.

Weiters ist es günstig, wenn zumindest ein elektrisches Steckverbindungselement der Wechselkupplung Hochfrequenzkontakte aufweist. Hochfrequenz bedeutet in diesem Zusammenhang eine Frequenz ab 100 kHz bis 9 GHz. Die Hochfrequenzkontakte werden beispielsweise bei einem am Wechseladapter montierten Werkzeug zum zerstörungsfreien Prüfen eines Bauteils mittels Ultraschall, insbesondere Ultraschall mit Schallbündelausrichtung, verwendet. Die Schallbündelausrichtung ist eine gerichtete Abstrahlung von Ultraschallimpulsen einer am Werkzeug montierten Sonde.

Gemäß einer bevorzugten Ausführungsform ist zumindest ein elektrisches Steckverbindungselement der Wechselkupplung hochpolig, wobei hochpolig eine Anzahl von mindestens 160 Polen bedeutet. Hochpolige Steckverbindungselemente werden beispielsweise bei Leitungen für Gruppenstrahl-Prüfköpfe zum Prüfen mit Phased-Array-Ultraschall zur Signalübertragung verwendet. Somit können Signale eines Werkzeugs, das am Wechseladapter montiert ist, über Leitungen und über das elektrische Steckverbindungselement zu einem Auswertegerät einer Phased-Array-Prüfelektronik übertragen werden.

Gemäß einer bevorzugten Ausführungsform weist zumindest ein elektrisches Steckverbindungselement der Wechselkupplung Kontakte zur Übertragung einer Versorgungsspannung vom Handhabungselement an den Wechseladapter auf. Die Kontakte zur Übertragung der Versorgungsspannung werden beispielsweise beim nichtzerstörenden Prüfen eines Bauteils mithilfe eines am Wechseladapter montierten Werkzeugs, das von einer Spannungsquelle versorgt wird, verwendet, um elektrische Leitungen des Handhabungselements und des Werkzeugs über die Wechselkupplung und den Wechseladapter zu verbinden.

Gemäß einer bevorzugten Ausführungsform weist zumindest ein elektrisches Steckverbindungselement der Wechselkupplung Kontakte zur Datenübertragung, insbesondere zur Übertragung einer Werkzeugidentifikation ("ToolID") und/oder analoger und/oder digitaler Sensordaten, vom Wechseladapter an das Handhabungselement, auf. Hierbei ist ToolID die eindeutige Identifikation eines Werkzeugs, beispielsweise mittels einer eindeutigen Nummer, und analoge und/oder digitale Sensorinformationen sind Informationen eines analogen und/oder digitalen Sensors eines am Wechseladapter montierten Werkzeugs.

Gemäß einer bevorzugten Ausführungsform weist zumindest ein elektrisches Steckverbindungselement der Wechselkupplung Kontakte zur Übertragung von Massepunkten auf. Dadurch können, wenn unterschiedliche galvanisch getrennte Erdungspunkte notwendig sind, hochfrequente Einflüsse minimiert oder eliminiert werden.

Bevorzugt weist zumindest ein optisches Steckverbindungselement der Wechselkupplung einen Lichtwellenleiter auf. Lichtwellenleiter dienen der Übertragung von Licht. Der Lichtwellenleiter des optischen Steckverbindungselements wird für verlustlose Übertragungen (Streamen) von digitalen Sensordaten mit einer hohen Bandbreite über lange Übertragungsstrecken verwendet. Insbesondere wird der Lichtwellenleiter des optischen Steckverbindungselements bei einem nichtzerstörenden Prüfen eines Bauteils mithilfe von Thermografie oder mithilfe eines digitalen Röntgen-Flächendetektors verwendet, wobei in beiden Fällen Sensordaten des verwendeten Prüfkopfes mit hoher Bandbreite zu einer Auswertestation gestreamt werden.

Bevorzugt weist die Wechselkupplung ein Mittelstück an der dem Handhabungselement zugewandten Seite mit einem Anschlusselement zum Anschluss einer Leitung vom Handhabungselement auf. Besonders bevorzugt steht das Anschlusselement in radialer Richtung von dem Mittelstück nach außen ab. Dadurch ermöglicht das Mittelstück einen Anschluss einer Leitung an die Wechselkupplung in radialer Richtung. Dies wird beispielsweise bei bestimmten Handhabungselementen benötigt, um die Wegführung der Leitung zu ermöglichen, ohne die Beweglichkeit des Handhabungselements zu beeinträchtigen.

Gemäß einer bevorzugten Ausführungsform weist die Wechselkupplung, vorzugsweise zumindest der Grundkörper, insbesondere der Grundkörper und das Mittelstück, Durchgangsbohrungen zum Verbinden der Wechselkupplung an der dem Handhabungselement zugewandten Seite mit einer Adapterplatte auf, um die Verbindung der Wechselkupplung mit einem normierten Handhabungselement zu vereinfachen.

Gemäß einer bevorzugten Ausführungsform ist eine Zuführung von Kabeln zu der Wechselkupplung in Richtung der Längsachse der Wechselkupplung angeordnet. Alternativ kann die Zuführung von Kabeln zu der Wechselkupplung orthogonal zur Längsachse der Wechselkupplung angeordnet sein.

Gemäß einer bevorzugten Ausführungsform weist eine Prüf- bzw. Bearbeitungsanlage, insbesondere zum nichtzerstörenden Prüfen eines Bauteils, vorzugsweise eines Faser-Kunststoff-Verbund-Bauteils, beispielsweise eines Flugzeugbauteils, ein Handhabungselement, insbesondere einen Roboterarm, eine Wechselvorrichtung gemäß einer der oben beschriebenen Ausführungsformen auf ,wobei der Wechseladapter über die Wechselkupplung mit dem Handhabungselement lösbar verbunden ist.

Die Erfindung wird nachstehend anhand eines in den Zeichnungen dargestellten, nicht einschränkenden Ausführungsbeispiels weiter erläutert.
Fig. 1 zeigt eine erfindungsgemäße Prüfanlage, die ein Handhabungselement und eine mehrteilige Wechselvorrichtung aufweist.
Fig. 2a zeigt die Wechselvorrichtung gemäß Fig. 1, die eine Wechselkupplung und einen Wechseladapter aufweist, in einer Explosionsdarstellung.
Fig. 2b zeigt die Wechselkupplung gemäß Fig. 1, 2 samt einem Mittelstück sowie eine Adapterplatte in einer Explosionsdarstellung.
Fig. 3 zeigt die Wechselkupplung, das Mittelstück und die Adapterplatte gemäß Fig. 2b in einer zweiten Explosionsdarstellung.
Fig. 4 zeigt die Wechselvorrichtung gemäß Fig. 2a im entkoppelten Zustand in einer Seitenansicht.
Fig. 5 zeigt einen Schnitt durch die Wechselvorrichtung im entkoppelten Zustand gemäß Fig. 4.
Fig. 6 zeigt die Wechselkupplung, das Mittelstück und die Adapterplatte gemäß Fig. 2b in Aufsicht.
Fig. 7 zeigt die Wechselvorrichtung gemäß Fig. 2a im gekuppelten und verspannten Zustand in einer Seitenansicht.
Fig. 8 zeigt einen Schnitt der Wechselvorrichtung im gekuppelten und verspannten Zustand gemäß Fig. 7.
Fig. 9 zeigt die Wechselvorrichtung gemäß Fig. 2a im ausgerichteten Zustand von Wechselkupplung und Wechseladapter in einer Seitenansicht.
Fig. 10 zeigt einen Schnitt der Wechselvorrichtung gemäß Fig. 9.
Fig. 11 zeigt den Wechseladapter gemäß Fig. 2a und ein Werkzeug zum nichtzerstörenden Prüfen eines Faser-Kunststoff-Verbund-Bauteils.

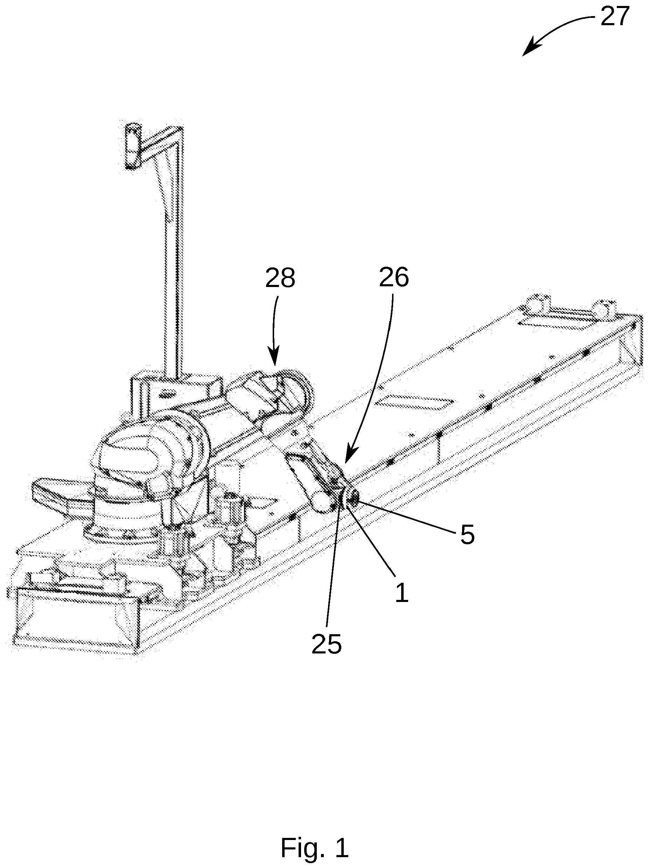

Fig. 1 zeigt eine erfindungsgemäße Prüfanlage 27 zum nichtzerstörenden Prüfen eines Faser-Kunststoff-Verbund-Bauteils. Die Prüfanlage weist eine Wechselvorrichtung 26, eine Adapterplatte 25 und ein Handhabungselement 28 auf, das als Roboterarm ausgeführt ist. Die Adapterplatte 25 ist an einer Seite an dem Handhabungselement 28 montiert und an der anderen Seite mit der Wechselvorrichtung 26 lösbar verbunden.

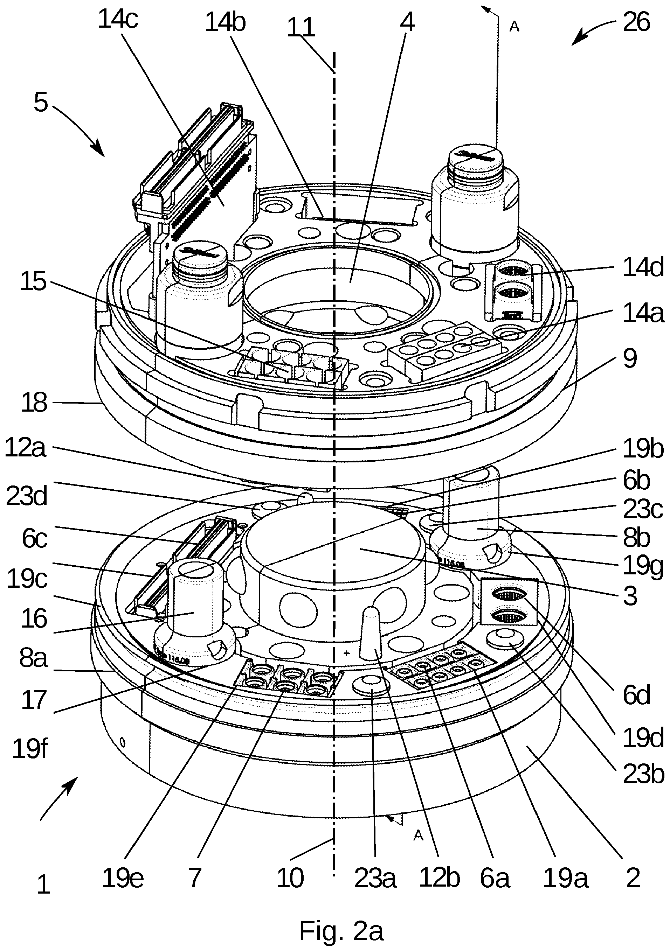

Fig. 2a zeigt die Wechselvorrichtung 26, die eine Wechselkupplung 1 und einen Wechseladapter 5 aufweist. Die Wechselkupplung 1 weist einen Grundkörper 2 und ein Spannelement 3 zum Verspannen mit einem korrespondierenden Spannelement 4 an dem Wechseladapter 5 auf. Die Spannelemente 3 und 4 wirken in bekannter Weise zusammen, so dass im Folgenden lediglich die für die Erfindung wesentlichen Komponenten erläutert werden. In der gezeigten Ausführung weist das Spannelement 3 an der Wechselkupplung 1 einen Spannzylinder mit Spannkugeln auf, welche mit entsprechenden Spannaufnahmen des Spannelements 4 am Wechseladapter 5 verspannbar sind.

Wie aus Fig. 2a ersichtlich, weist die Wechselkupplung 1 beispielsweise vier elektrische Steckverbindungselemente 6a, 6b, 6c und 6d, ein optisches Steckverbindungselement 7 und zwei Flüssigkeitskupplungselemente 8a, 8b auf. Beim Verbinden der Wechselkupplung 1 mit dem Wechseladapter 5 werden die Flüssigkeitskupplungselemente 8a, 8b ineinander gesteckt, wobei eine flüssigkeitsleitende Verbindung zwischen Flüssigkeitsleitungen innerhalb der Flüssigkeitskupplungselemente 8a, 8b hergestellt wird.

Wie aus der Zeichnung weiters ersichtlich, stehen die Flüssigkeitskupplungselemente 8a, 8b jeweils weiter in axialer Verbindungsrichtung mit dem Wechseladapter 5 vor als die elektrischen Steckverbindungselemente 6a, 6b, 6c und 6d, wodurch die Flüssigkeitskupplungselemente 8a, 8b - wie nachstehend noch im Detail erläutert werden wird - beim Anschließen des Wechseladapters 5 eine Ausrichtung der elektrischen Steckverbindungselemente 6a, 6b, 6c und 6d bewirken.

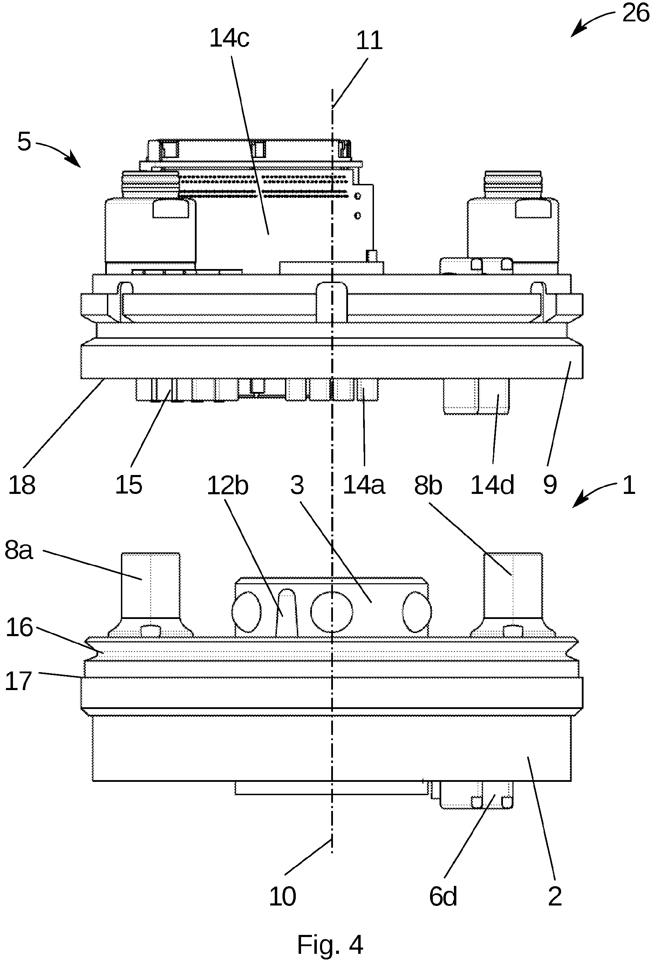

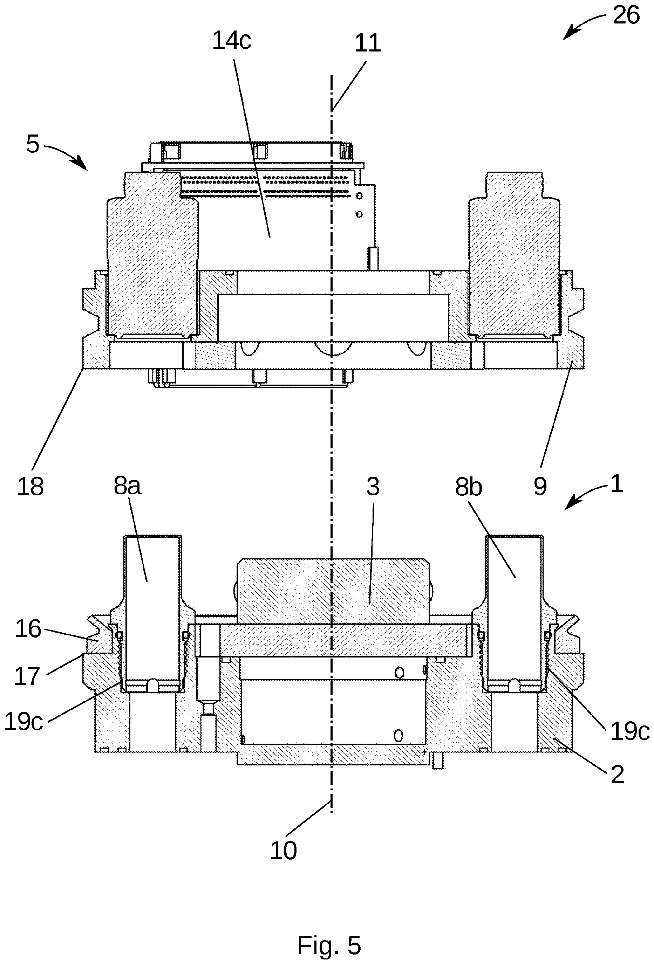

Wie aus Fig. 2a, 4 und 5 ersichtlich, weist der Wechseladapter 5 einen Basiskörper 9 auf. Der Grundkörper 2 der Wechselkupplung 1 und der Basiskörper 9 des Wechseladapters 5 weisen jeweils eine zylindrische Grundform auf. Bei Verbindung der Wechselkupplung 1 mit dem Wechseladapter 5 mithilfe der Spannelemente 3 und 4 sind die Längsachse 10 des Grundkörpers 2 und die Längsachse 11 des Basiskörpers 9 deckungsgleich. Die Spannelemente 3 und 4 verhindern ein Verschieben des Wechseladapters 5 in Bezug auf die Wechselkupplung 1 in axialer und radialer Richtung der Rotationsachsen 10 und 11, wohingegen eine Verdrehung des Wechseladapters 5 um die Längsachse 10 durch die Spannelemente 3 und 4 nicht verhindert wird. Aus diesem Grund weist die Wechselkupplung 1 in der gezeigten Ausführung ein Drehsicherungselement zur Verbindung mit einem korrespondierenden Drehsicherungselement am Wechseladapter auf. Als Drehsicherungselement an der Wechselkupplung 1 sind in der gezeigten Ausführung zwei in Richtung der Verbindung mit dem Wechseladapter 5 verjüngte Verbindungszapfen 12a und 12b und als korrespondierendes Drehsicherungselement am Wechseladapter 5 zwei dazu passende Zapfenaufnahmen 13a und 13b vorgesehen.

In der gezeigten Ausführungsform erstrecken sich die Flüssigkeitskupplungselemente 8a und 8b parallel zu den beiden verjüngten Verbindungszapfen 12a und 12b. Aufgrund der Verjüngung der Verbindungszapfen 12a und 12b werden die elektrischen Steckverbindungselemente 6a, 6b, 6c und 6d und das optische Steckverbindungselement 7 vor dem Verbinden der Wechselkupplung 1 mit dem Wechseladapter 5 an vier entsprechenden elektrischen Steckverbindungselementen 14a, 14b, 14c und 14d und einem entsprechenden optischen Steckverbindungselement 15 am Wechseladapter 5 zunächst durch die Flüssigkeitskupplungselemente 8a und 8b grob ausgerichtet und danach durch die Verbindungszapfen 12a und 12b fein ausgerichtet. Weiters weisen die Flüssigkeitskupplungselemente 8a und 8b einen größeren radialen Abstand zur Mittelachse des Spannelements 3 auf als die Verbindungszapfen 12a und 12b. Dadurch können die Flüssigkeitskupplungselemente 8a und 8b beim Verdrehen des Wechseladapters 5 gegenüber der Wechselkupplung 1 Drehmomente besser aufnehmen als die Verbindungszapfen 12a und 12b, welche dadurch kleiner dimensioniert werden können.

In der gezeigten Ausführungsform weist die Wechselkupplung 1 einen Dichtungsring 16 zur dichtenden Verbindung der Wechselkupplung 1 mit dem Wechseladapter 5 auf. Der Dichtungsring 16 weist in der gezeigten Ausführung einen V-förmigen Querschnitt auf. Dabei zeigt die Spitze des "V"s nach innen, um ein Ansammeln und in weiterer Folge ein Abtropfen einer Flüssigkeit aus der Umgebung am Dichtungsring 16 zu ermöglichen. Der Dichtungsring 16 erstreckt sich in Umfangsrichtung am (bezogen auf die Längsachse der Wechselkupplung 1) Außenrand 17 des Grundkörpers 2 der Wechselkupplung 1 auf Seite des Wechseladapters 5. Eine Außenkante des Dichtungsrings 16 wird beim Kuppeln ab Kontakt mit dem Wechseladapter 5 in Richtung eines Außenrands 18 des Wechseladapters 5 gedrückt und führt somit etwaig anliegende Feuchtigkeit in Richtung des Außenrands 18 des Wechseladapters 5 ab.

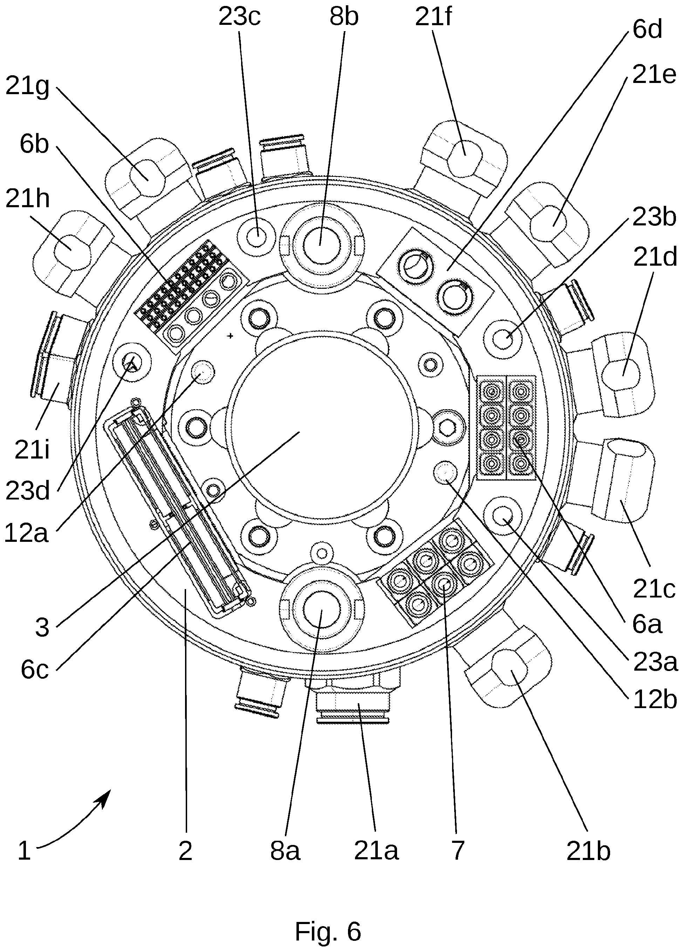

Wie aus Fig. 2a und 6 ersichtlich, sind die elektrischen Steckverbindungselemente 6a, 6b, 6c und 6d, das optische Steckverbindungselement 7 und die Flüssigkeitskupplungselemente 8a und 8b der Wechselkupplung 1 ebenso wie die elektrischen Steckverbindungselemente 14a, 14b, 14c und 14d und das optische Steckverbindungselement 15 des Wechseladapters 5 innerhalb des Dichtungsrings 16 angeordnet. Dadurch sind die korrespondierenden elektrischen Steckverbindungselemente und Flüssigkeitskupplungselemente gegen ein Eindringen von Flüssigkeiten und Gase aus der Umgebung geschützt.

Um die elektrischen Steckverbindungselemente 6a, 6b, 6c und 6d, das optische Steckverbindungselement 7 und die Flüssigkeitskupplungselemente 8a und 8b an der Wechselkupplung 1 austauschbar zu befestigen, weist der Grundkörper 2 der Wechselkupplung 1 Aussparungen 19a, 19b, 19c, 19d, 19e, 19f und 19g im Grundkörper 2 zur lösbaren Anordnung der genannten Elemente auf.

In der gezeigten Ausführungsform weist das elektrische Steckverbindungselement 6a Hochspannungs- und Hochstromkontakte auf, die mit Hochspannungs- und Hochstromkontakten des korrespondierenden elektrischen Steckverbindungselementes 14a des Wechseladapters 5 im verspannten Zustand der Wechselkupplung 1 mit dem Wechseladapter 5 verbunden sind. Die Hochspannungs- und Hochstromkontakte werden beispielsweise zum Antreiben von Servomotoren bei 680 V Zwischenkreisspannung an einem motorisierten Wechseladapter verwendet.

In der gezeigten Ausführungsform weist das elektrische Steckverbindungselement 6b Hochfrequenzkontakte auf, die mit Hochfrequenzkontakten des korrespondierenden elektrischen Steckverbindungselementes 14b des Wechseladapters 5 im verspannten Zustand der Wechselkupplung 1 mit dem Wechseladapter 5 verbunden sind. Die Hochfrequenzkontakte, die in der gezeigten Ausführung als koaxiale Hochfrequenzkontakte ausgeführt sind, werden beispielsweise beim nichtzerstörenden Prüfen eines Bauteils mittels Ultraschalles verwendet. Dabei wird ein am Wechseladapter 5 montiertes Werkzeug über die Hochfrequenzkontakte mit Hochfrequenzimpulsen versorgt, um Ultraschallwellen zu erzeugen.

Weitere Hochfrequenzkontakte sind in der gezeigten Ausführungsform beim elektrischen Steckverbindungselement 6c vorhanden, die mit Hochfrequenzkontakten des korrespondierenden elektrischen Steckverbindungselementes 14c des Wechseladapters 5 im verspannten Zustand der Wechselkupplung 1 mit dem Wechseladapter 5 verbunden sind. Die Hochfrequenzkontakte des elektrischen Steckverbindungselements 6c, die in der gezeigten Ausführung als Hochfrequenzkontakte mit einer hohen Packungsdichte ausgeführt sind, werden beispielsweise verwendet, um ein Bauteil mittels Ultraschalles mit Schallbündelausrichtung zerstörungsfrei zu prüfen.

Dabei werden von Kontakt zu Kontakt zeitversetzte Hochfrequenzimpulse einem Werkzeug, das mit einem Ultraschall-Gruppenstrahler ausgestattet ist und am Wechseladapter 5 montiert ist, über die Hochfrequenzkontakte der korrespondierenden elektrischen Steckverbindungselemente 6c und 14c zur Verfügung gestellt. Die Hochfrequenzkontakte mit hoher Packungsdichte sind federnd gelagert, um zusätzlich gegen Beschädigungen, die beispielsweise durch Stöße hervorgerufen werden, geschützt zu sein.

In der gezeigten Ausführungsform ist das elektrische Steckverbindungselement 6d eine hochpolige Weggeber-Schnittstelle, die mit dem korrespondierenden elektrischen Steckverbindungselement 14d des Wechseladapters 5, das ebenfalls als hochpolige Weggeber-Schnittstelle ausgeführt ist, im verspannten Zustand der Wechselkupplung 1 mit dem Wechseladapter 5 verbunden ist. Dadurch werden Signale zwischen dem Werkzeug, das am Wechseladapter 5 montiert ist, und einem Regelungselement, das mit der Wechselkupplung 1 verbunden ist, ausgetauscht.

In der gezeigten Ausführungsform weist das elektrische Steckverbindungselement 6b neben den Hochfrequenzkontakten Kontakte zur Übertragung von Versorgungsspannungen und Kontakte zur Datenübertragung auf, wobei die Kontakte an der Wechselkupplung 1 im verspannten Zustand der Wechselkupplung 1 mit dem Wechseladapter 5 mit entsprechenden Kontakten des korrespondierenden elektrischen Steckverbindungselementes 14b des Wechseladapters 5 verbunden sind. Die Kontakte zur Übertragung von Versorgungsspannungen werden beispielsweise verwendet, um elektrische Leitungen, die zu einem Werkzeug am Wechseladapter 5 zum zerstörungsfreien Prüfen eines Bauteils mit elektrischen Leitungen zu verbinden, die zu einer Spannungsquelle führen.

Weiters weist das elektrische Steckverbindungselement 6b in der gezeigten Ausführungsform Kontakte zur Datenübertragung von Werkzeugidentifikation ("ToolID") und analoger und digitaler Sensorinformation auf. Dabei werden die ToolID, die eine eindeutige Identifikation eines Werkzeugs, das am Wechseladapter 5 montiert ist, und analoge und digitale Informationen eines am Werkzeug befestigen Sensors über die Kontakte zur Datenübertragung des elektrischen Steckverbindungselements 6b beispielsweise an ein Datenverarbeitungsgerät, das mit der Wechselkupplung 1 verbunden ist, weitergeleitet.

In der gezeigten Ausführungsform weist das optische Steckverbindungselement 7 Lichtwellenleiter auf, die mit Lichtwellenleitern des korrespondierenden optischen Steckverbindungselementes 15 des Wechseladapters 5 im verspannten Zustand der Wechselkupplung 1 mit dem Wechseladapter 5 verbunden sind. Die Lichtwellenleiter werden beispielsweise beim zerstörungsfreien Prüfen eines Bauteils mithilfe von Thermografie oder digitaler Radiographie verwendet. Die Lichtwellenleiter dienen dabei als störfreier Übertragungskanal mit sehr hoher Bandbreite.

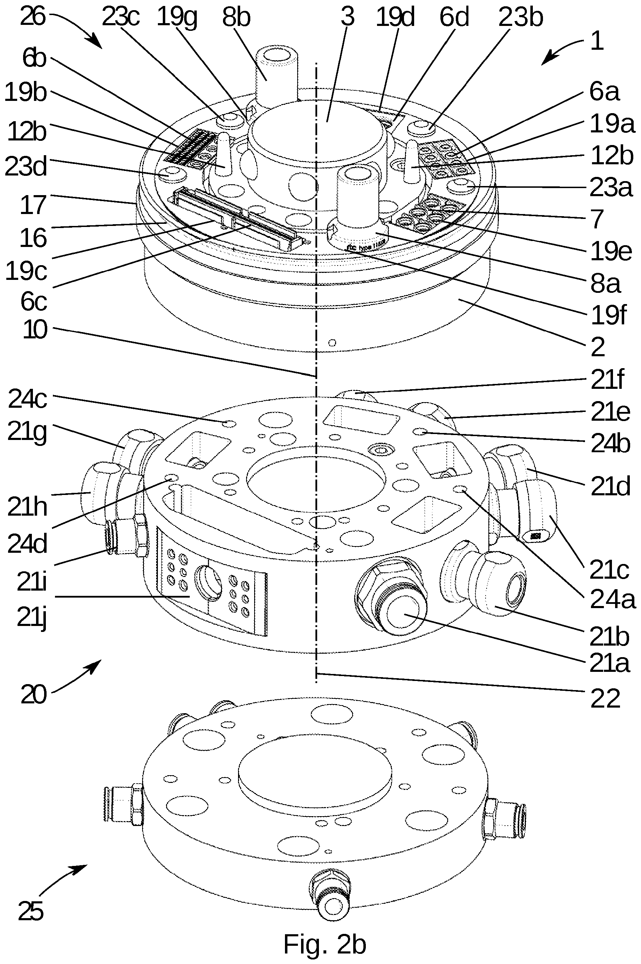

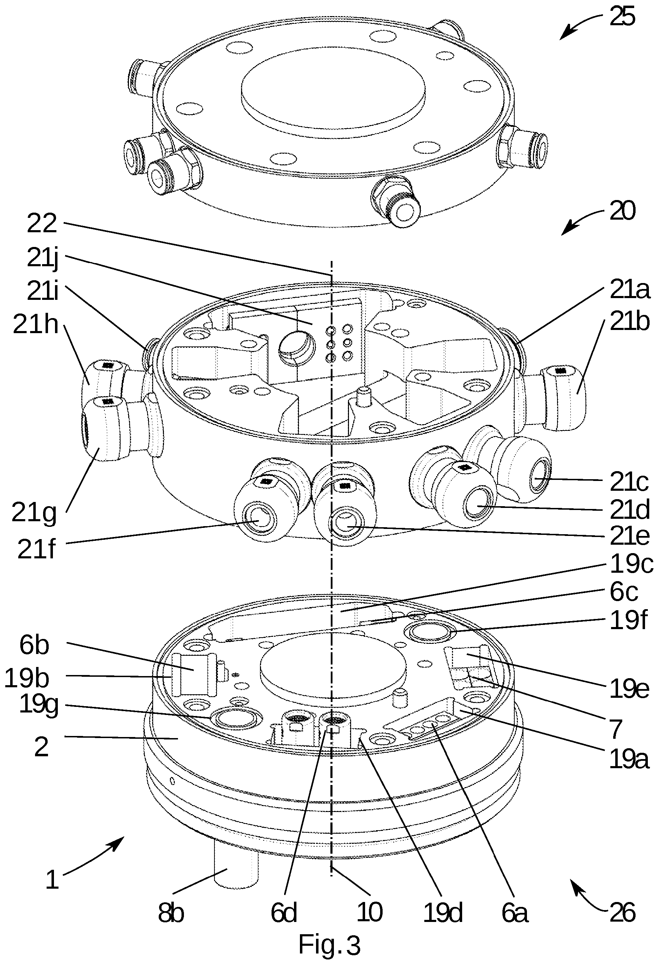

Wie in Fig. 2b und 3 ersichtlich, weist die Wechselkupplung 1 in der gezeigten Ausführung ein Mittelstück 20 an der dem Handhabungselement zugewandten Seite auf. Das Mittelstück 20 weist Anschlusselemente 21a, 21b, 21c, 21d, 21e, 21f, 21g, 21h, 21i, und 21j auf. In der gezeigten Ausführung weist das Mittelstück eine zylindrische Grundform auf, wobei die Längsachse 22 des Mittelstücks 20 und die Rotationsachse 10 des Grundkörpers 2 deckungsgleich sind. Das Anschlusselement 21j dient zur abgedichteten Durchführung von Hochfrequenz-Einzelkontaktkabeln sowie zur abgedichteten Durchführung eines Microkoaxialkabels zur Versorgung der Hochfrequenz-Kontakte mit hoher Packungsdichte des elektrischen Steckverbindungselements 6c, die auf einer rechteckigen Platine aufgelötet und über diese mit dem Microkoaxialkabel verbunden sind. Die rechteckige Platine und das Microkoaxialkabel werden fertig konfektioniert geliefert und müssen somit zusammen verbaut werden und tauschbar sein. Die Abdichtung gegenüber einer Umgebung erfolgt durch Quetschen eines Dichtungsblocks durch das Anschlusselement 21j, wobei durch den Dichtungsblock die Hochfrequenz-Einzelkontaktkabel und das Microkoaxialkabel durchgeführt werden. Durch die Quetschung erfolgt einerseits eine Abdichtung der Kabel, andererseits eine Abdichtung zum Gehäuse hin. Falls eine hochwertigere Abdichtung notwendig sein sollte, so ist das Mittelstück 20 so ausgeformt, dass das Mittelstück 20 zusätzlich in einem inneren Hohlraum mit einer Dichtmasse ausgegossen werden kann. Die Anschlusselemente 21a bis 21j sind in radialer Richtung der Rotationsachse 22 nach außen an dem Mittelstück 20 angeordnet, um einen abgedichteten Anschluss von Leitungen in radialer Richtung an der Wechselkupplung 1 zu ermöglichen, wobei die Leitungen von Beanspruchungen durch Zugkräfte entlastet werden. Diese Ausführung wird dann vorgesehen, wenn das Handhabungselement als mehrachsig beweglicher Roboterarm ausgeführt ist, um die Wegführung der Leitungen zu ermöglichen. Bei einer anderen Ausführung des Handhabungselements, beispielsweise bei einer sogenannten Linearkinematik, kann das Mittelstück 20 wegfallen.

In der gezeigten Ausführungsform weist der Grundkörper 2 der Wechselkupplung 1 Pneumatikübertragungskanäle 23a, 23b, 23c und 23d und das Mittelstück 20 der Wechselkupplung 1 Pneumatikübertragungskanäle 24a, 24b, 24c und 24d auf. Die Adapterplatte 25 ist an einem Maschinenflansch angeschraubt, der in der gezeigten Ausführung nicht dargestellt ist. Der Maschinenflansch ist Stand der Technik, so dass sich nähere Ausführungen dazu erübrigen. Die Verschraubung der Wechselkupplung 1 mit dem Mittelstück 20, der Adapterplatte 25 und dem Maschinenflansch ist derart angeordnet, dass vom Maschinenflansch beginnend verschraubt und zusammengebaut wird. D.h. in dem Fall, in dem der Maschinenflansch ein Roboterflansch ist, wird zuerst die Adapterplatte 25, dann das Mittelstück 20 und dann die Wechselkupplung 1 verschraubt. Der Adapter 25, das Mittelstück 20, die Wechselkupplung 1 und auch die Verschraubungen sind so ausgeführt, dass diese nach außen in die Umgebung abdichten und somit kein Feuchtigkeitseintrag von außen erfolgt. Das Abdichten gegenüber der Umgebung gilt ebenfalls für verschiedene Wechseladapter.

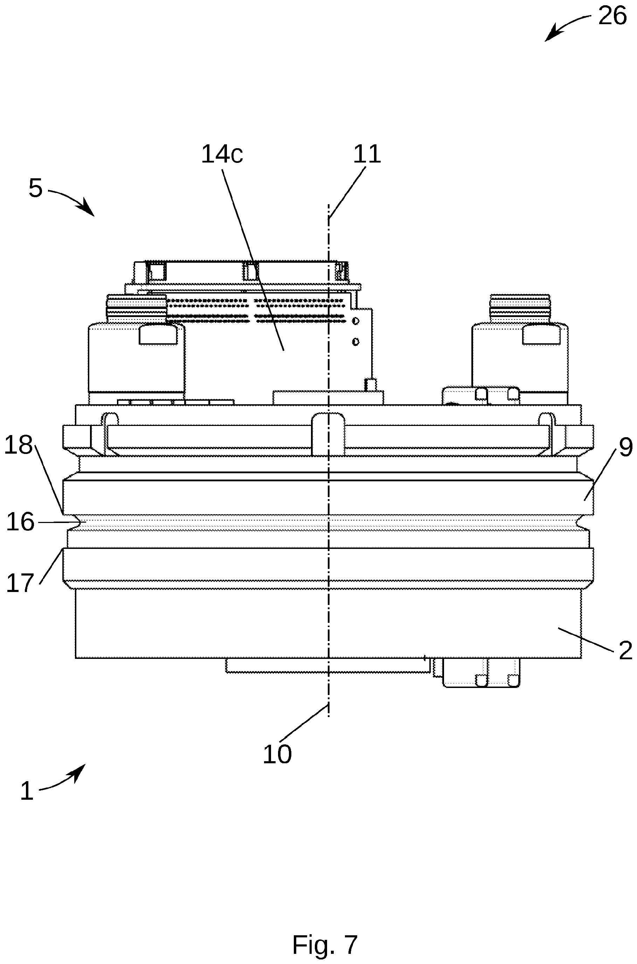

Fig. 7 zeigt die Wechselvorrichtung 26, wobei die Wechselkupplung 1 und der Wechseladapter 5 lösbar miteinander verbunden sind. Hierbei ist die Wechselkupplung 1 mit dem Wechseladapter 5 durch ein Verspannen des Spannelements 3 der Wechselkupplung 1 mit dem Spannelement 4 des Wechseladapters 5 verspannt. Der Wechseladapter 5 der Wechselvorrichtung 26 ermöglicht in der gezeigten Ausführungsform die Montage verschiedener Werkzeuge zum nichtzerstörenden Prüfen eines Faser-Kunststoff-Verbund-Bauteils.

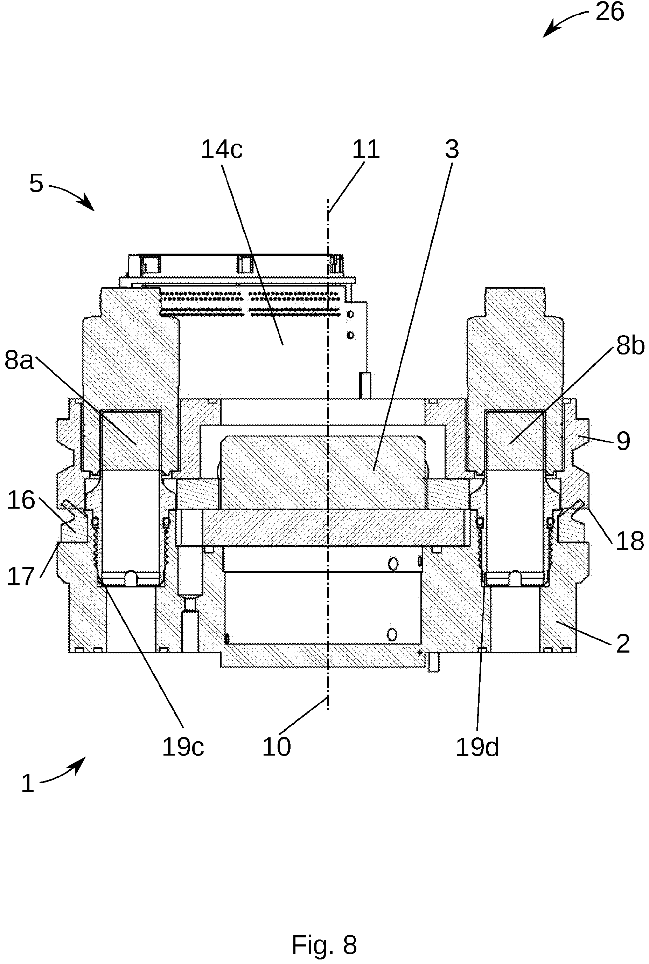

Wie in Fig. 8 ersichtlich, stehen die Flüssigkeitskupplungselemente 8a und 8b weiter in Richtung des Wechseladapters 5 vor und verhindern somit ein Aufsetzen der korrespondierenden elektrischen bzw. optischen Steckverbindungselemente in einem verdrehten Zustand auf die elektrischen bzw. optischen Steckverbindungselemente der Wechselkupplung 1.

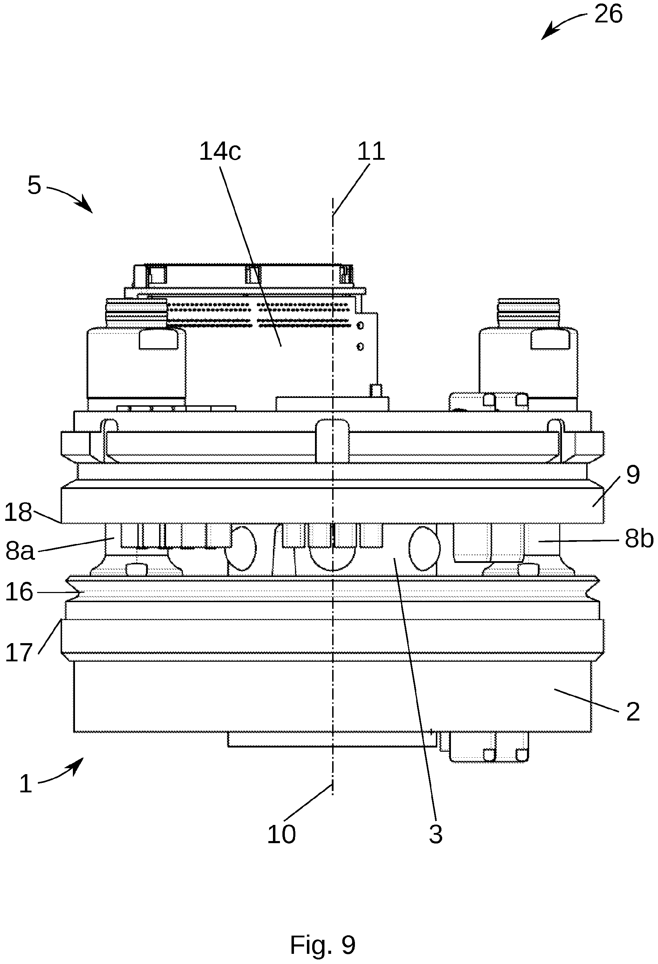

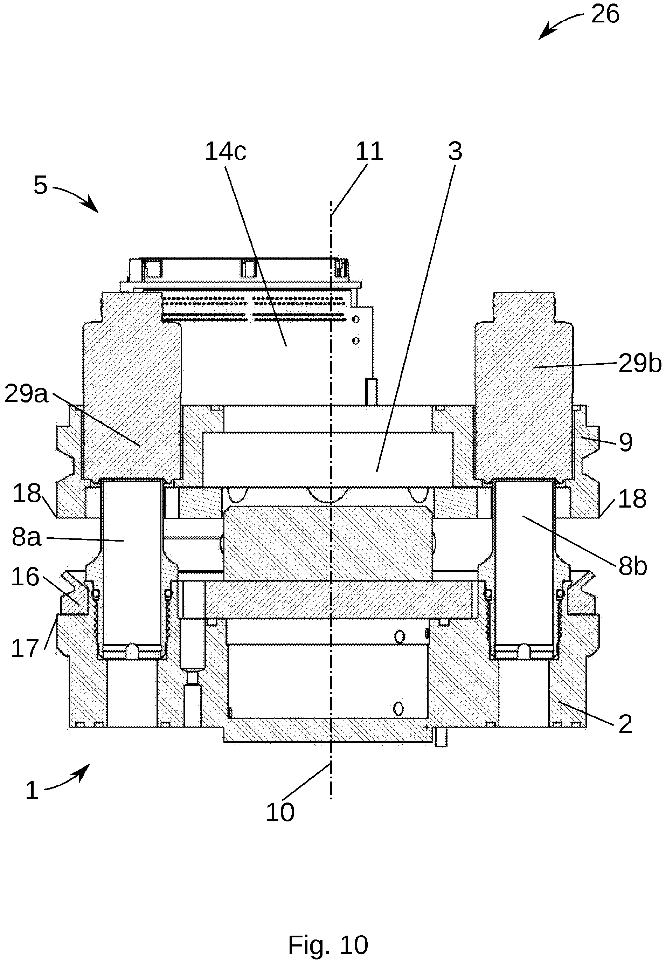

Fig. 9 und 10 zeigen die Wechselkupplung 1 und den Wechseladapter 5 der Wechselvorrichtung 26 während des Verbindungsvorgangs vor dem Erreichen des verspannten Zustands. Dabei sind die Wechselkupplung 1 und der Wechseladapter 5 durch die Verbindung der Flüssigkeitskupplungselemente 8a und 8b der Wechselkupplung 1 mit den entsprechenden Flüssigkeitselementen 29a und 29b des Wechseladapters 5 aneinander ausgerichtet.

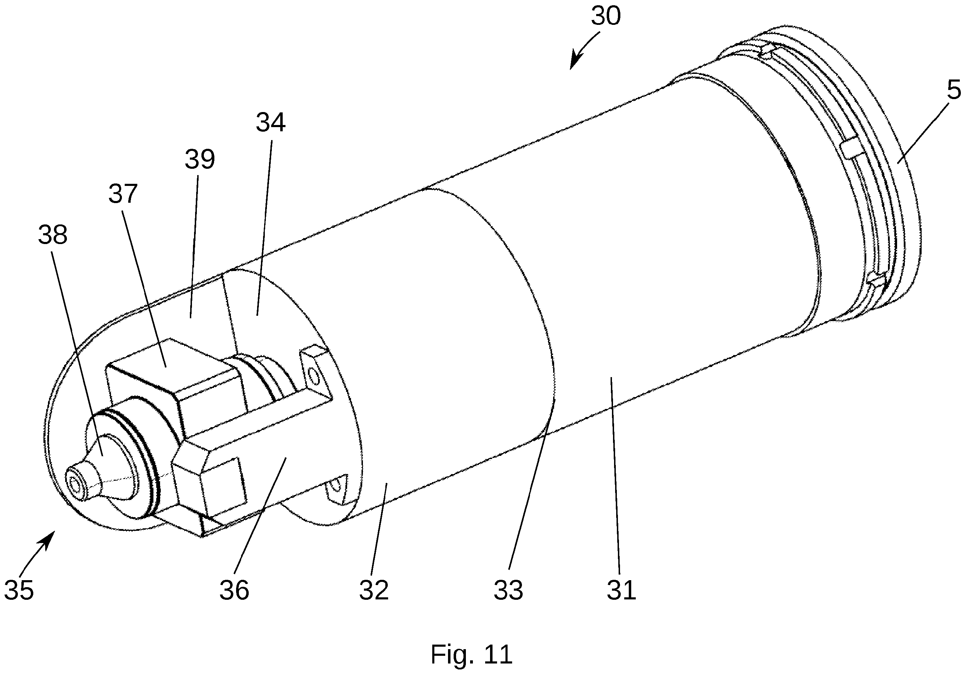

Fig. 11 zeigt den Wechseladapter 5 der Wechselvorrichtung 26 gemäß Fig. 2a, an dem ein Werkzeug 30 zum nichtzerstörenden Prüfen eines Faser-Kunststoff-Verbund-Bauteils montiert ist. Das Werkzeug 30 weist ein koaxial an den Wechseladapter 5 angrenzendes zylinderförmiges Motorgehäuse 31 auf, das mit dem Wechseladapter 5 drehfest und lösbar verbunden ist. In dem Motorgehäuse 31 ist ein Servomotor angeordnet, der in Fig. 11 nicht gezeigt ist. An einer Seite des Motorgehäuses 31, die im montierten Zustand des Werkzeugs 30 dem Wechseladapter 5 gegenüberliegt, weist das Werkzeug 30 ein zylinderförmiges Getriebegehäuse 32 auf, das koaxial zum zylinderförmigen Motorgehäuse 31 angeordnet ist. In dem Getriebegehäuse 32 ist ein Getriebe angeordnet, das mit dem Servomotor verbunden ist und vom Servomotor erzeugte Drehmomente und/oder Drehzahlen umwandelt. Zwischen dem Motorgehäuse 31 und dem Getriebegehäuse 32 weist das Werkzeug 30 einen mechanischen Kollisionsschutz 33 auf, der ein Wegklappen des Getriebegehäuses 32 vom Motorgehäuse 31 bei mechanischer Außeneinwirkung auf das Getriebegehäuse 32 ermöglicht. An einer dem Motorgehäuse 31 gegenüberliegenden Seite 34 des Getriebegehäuses 32 ist ein Werkzeugkopf 35 angeordnet, der an einer am Getriebegehäuse 32 befestigten Halterung 36 drehbar angeordnet ist. Mithilfe des Servomotors kann der Werkzeugkopf 35 gegenüber der Halterung 36 und somit gegenüber der Wechselvorrichtung 26 gedreht werden. Der Werkzeugkopf 35 weist einen Prüfkopf 37 und eine Wasserdüse 38 auf. Um den Werkzeugkopf 35 vor mechanischen Einwirkungen zu schützen, ist an der dem Motorgehäuse 31 gegenüberliegenden Seite 34 ein Schutzblech 39 befestigt, das auf einer Seite des Werkzeugkopfes 35 angeordnet ist, die der Halterung 36 gegenüberliegt.

In der gezeigten Ausführungsform gemäß Fig. 11 weist das Werkzeug 30 an einer an den Wechseladapter 5 anliegenden Seite ein elektrisches Steckverbindungselement mit vier Hochspannungs- und Hochstromkontakten zum Antrieb des Servomotors auf, die mit Hochspannungs- und Hochstromkontakten des korrespondierenden elektrischen Steckverbindungselementes 14a des Wechseladapters 5 im montierten Zustand des Werkzeugs 30 mit dem Wechseladapter 5 verbunden sind. Des Weiteren weist das Werkzeug 30 an der am Wechseladapter 5 anliegenden Seite ein elektrisches Steckverbindungselement mit zwei Kontakten für eine Motorbremse des Servomotors auf, das mit einem korrespondierenden Steckverbindungselement des Wechseladapters 5 im montierten Zustand des Werkzeugs 30 mit dem Wechseladapter 5 verbunden ist. Zusätzlich ist an der am Wechseladapter 5 anliegenden Seite des Werkzeugs 30 ein elektrisches Steckverbindungselement mit einer geschirmten 14-Pin Geberschnittstelle für ein externes Messsystem, einer 9-Pin Geberschnittstelle für ein Motormesssystem des Servomotors und sechs Datenleitungen für eine ToolID auf, wobei das elektrische Steckverbindungselement mit dem korrespondierenden elektrischen Steckverbindungselement 14b des Wechseladapters 5 verbindbar ist, um das montierte Werkzeug 30 eindeutig zu identifizieren und vom externen Messsystem und vom Motormesssystem gemessene Daten weiterzuleiten.

In der gezeigten Ausführungsform gemäß Fig. 11 weist das Werkzeug 30 an der an den Wechseladapter 5 anliegenden Seite zwei Flüssigkeitsventile auf, die im montierten Zustand des Werkzeugs 30 mit dem Wechseladapter 5 mit den Flüssigkeitselementen 29a und 29b des Wechseladapters 5 verbunden sind. Von den beiden Flüssigkeitsventilen führen Flüssigkeitsleitungen zur Wasserdüse 38, um diese mit Wasser zu versorgen. Des Weiteren weist das Werkzeug 30 auf Seite des Wechseladapters 5 drei Kupplungselemente für Luft auf, die jeweils mit einem entsprechenden Kupplungselement für Luft am Wechseladapter 5 verbunden sind. Ein erstes Kupplungselement für Luft des Werkzeugs 30 versorgt das Werkzeug 30 mit Sperrluft, um dieses gegenüber der Umgebung abzudichten. Ein zweites Kupplungselement für Luft dient einer Überwachung des mechanischen Kollisionsschutzes 33, indem der mechanische Kollisionsschutz 33 mit Sperrluft versorgt wird. Wenn das Getriebegehäuse 32 vom Motorgehäuse 31 wegklappt, wird durch Entweichen der Sperrluft die relative Bewegung des Getriebegehäuses 32 gegenüber dem Motorgehäuse 31 detektiert. Ein drittes Kupplungselement versorgt das Werkzeug 30 mit Luft zum Abblasen von Wassertropfen. Zusätzlich weist das Werkzeug 30 an der an den Wechseladapter 5 anliegenden Seite ein elektrisches Steckverbindungselement mit zwei koaxialen Hochfrequenzkontakten auf, die mit Hochfrequenzkontakten des korrespondierenden elektrischen Steckverbindungselementes 14c des Wechseladapters 5 im montierten Zustand des Werkzeugs 30 mit dem Wechseladapter 5 verbunden sind.

Über die zwei koaxialen Hochfrequenzkontakte des Werkzeugs 30 wird der Prüfkopf 37 mit Hochfrequenzimpulsen versorgt, um Ultraschallwellen zu erzeugen.

## Patentansprüche

1. Wechselvorrichtung (26) insbesondere zum nichtzerstörenden Prüfen eines Bauteils, vorzugsweise eines Faser-Kunststoff-Verbund-Bauteils, aufweisend:
- eine Wechselkupplung (1) zur Verbindung eines Handhabungselements (28), insbesondere eines Roboterarms, mit einem Wechseladapter (5), und
- den Wechseladapter (5), der mit der Wechselkupplung (1) lösbar verbunden ist, wobei die Wechselkupplung (1) aufweist:
- ein Spannelement (3) zum Verspannen mit einem korrespondierenden Spannelement (4) am Wechseladapter (5),
- zumindest ein elektrisches (6a, 6b, 6c, 6d) und/oder optisches Steckverbindungselement (7) zur Verbindung mit zumindest einem korrespondierenden elektrischen (14a, 14b, 14c, 14d) und/oder optischen Steckverbindungselement (15) am Wechseladapter (5),
- wobei die Wechselkupplung (1) zwei Wasserkupplungselemente (8a, 8b) zur Verbindung mit zwei entsprechenden Wasserkupplungselementen (29a, 29b) am Wechseladapter (5) aufweist,
- **dadurch gekennzeichnet, dass** die Wasserkupplungselemente (8a, 8b) weiter in Richtung der Verbindung mit dem Wechseladapter (5) vorstehen als das elektrische (6a, 6b, 6c, 6d) und/oder optische (7) Steckverbindungselement, so dass das elektrische (6a, 6b, 6c, 6d) und/oder optische Steckverbindungselement (7) und das korrespondierende elektrische (14a, 14b, 14c, 14d) und/oder optische Steckverbindungselement (15) am Wechseladapter (5) vor dem Aufeinandertreffen durch das Verbinden der Wasserkupplungselemente (8a, 8b) mit den entsprechenden Wasserkupplungselementen (29a, 29b) am Wechseladapter (5) aneinander ausgerichtet sind.

2. Wechselvorrichtung (26) nach Anspruch 1, **dadurch gekennzeichnet, dass** die Wechselkupplung (1) ein Drehsicherungselement zur Verbindung mit einem korrespondierenden Drehsicherungselement am Wechseladapter (5) aufweist, wobei als Drehsicherungselement bevorzugt ein in Richtung der Verbindung mit dem Wechseladapter (5) verjüngter Verbindungszapfen (12a, 12b) und als korrespondierendes Drehsicherungselement am Wechseladapter (5) eine Zapfenaufnahme (13a, 13b) vorgesehen ist.

3. Wechselvorrichtung (26) nach Anspruch 2, **dadurch gekennzeichnet, dass** die Wasserkupplungselemente (8a, 8b) einen größeren radialen Abstand zum Spannelement (3) aufweisen als das Drehsicherungselement.

4. Wechselvorrichtung (26) nach einem der Ansprüche 1 bis 3, **dadurch gekennzeichnet, dass** die Wechselkupplung (1) einen Dichtungsring (16) zur dichtenden Verbindung mit dem Wechseladapter (5) aufweist, wobei der Dichtungsring (16) bevorzugt einen V-förmigen Querschnitt aufweist.

5. Wechselvorrichtung (26) nach Anspruch nach Anspruch 4, **dadurch gekennzeichnet, dass** der Dichtungsring (16) an einem Außenrand (17) eines vorzugsweise zylindrischen Grundkörpers (2) der Wechselkupplung (1) angeordnet ist.

6. Wechselvorrichtung (26) nach Anspruch 4 oder 5, **dadurch gekennzeichnet, dass** das elektrische (6a, 6b, 6c, 6d) und/oder optische Steckverbindungselement (7) und die Wasserkupplungselemente (8a, 8b) jeweils in radialer Richtung innerhalb des Dichtungsrings (16) angeordnet sind.

7. Wechselvorrichtung (26) nach einem der Ansprüche 1 bis 6, **dadurch gekennzeichnet, dass** die Wechselkupplung (1) eine erste Aussparung (19a, 19b, 19c, 19d, 19e) zur lösbaren Anordnung des elektrischen (6a, 6b, 6c, 6d) und/oder optischen Steckverbindungselements (7) und/oder eine zweite Aussparung (19f, 19g) zur lösbaren Anordnung der Wasserkupplungselemente (8a, 8b) aufweist.

8. Wechselvorrichtung (26) nach einem der Ansprüche 1 bis 7, **dadurch gekennzeichnet, dass** zumindest ein elektrisches Steckverbindungselement (6a) Hochspannungs- bzw. Hochstromkontakte und/oder zumindest ein elektrisches Steckverbindungselement (6b, 6c) Hochfrequenzkontakte
aufweist und/oder zumindest ein elektrisches Steckverbindungselement (6d) hochpolig ist.

9. Wechselvorrichtung (26) nach einem der Ansprüche 1 bis 8, **dadurch gekennzeichnet, dass** zumindest ein elektrisches Steckverbindungselement (6b) Kontakte zur Übertragung einer Versorgungsspannung vom Handhabungselement (28) an den Wechseladapter (5) aufweist.

10. Wechselvorrichtung (26) nach einem der Ansprüche 1 bis 9, **dadurch gekennzeichnet, dass** zumindest ein elektrisches Steckverbindungselement (6b) Kontakte zur Datenübertragung, insbesondere zur Übertragung einer Werkzeugidentifikation und/oder analoger und/oder digitaler Sensordaten, vom Wechseladapter (5) an das Handhabungselement (28), aufweist.

11. Wechselvorrichtung (26) nach einem der Ansprüche 1 bis 10, **dadurch gekennzeichnet, dass** zumindest ein optisches Steckverbindungselement (7) einen Lichtwellenleiter aufweist.

12. Wechselvorrichtung (26) nach einem der Ansprüche 1 bis 11, **gekennzeichnet durch** ein Mittelstück (20) an der dem Handhabungselement (28) zugewandten Seite mit einem Anschlusselement (21a, 21b, 21c, 21d, 21e, 21f, 21g, 21h, 21i, 21j) zum Anschluss einer Leitung an dem Handhabungselement (28).

13. Wechselvorrichtung (26) nach Anspruch 12, **dadurch gekennzeichnet, dass** das Anschlusselement (21a, 21b, 21c, 21d, 21e, 21f, 21g, 21h, 21i, 21j) in radialer Richtung von dem Mittelstück (20) nach außen steht.

14. Prüf- bzw. Bearbeitungsanlage (27), insbesondere zum nichtzerstörenden Prüfen eines Bauteils, vorzugsweise eines Faser-Kunststoff-Verbund-Bauteils, aufweisend:
- ein Handhabungselement (28), insbesondere ein Roboterarm,
- eine Wechselvorrichtung (26) nach einem der Ansprüche 1 bis 13 , wobei der Wechseladapter (5) über die Wechselkupplung (1) mit dem Handhabungselement (28) lösbar verbunden ist.

## Claims

1. Change-over device (26), in particular for non-destructive testing of a component, preferably a fibre-plastics composite component, comprising:
- a change-over coupling (1) for connecting a handling element (28), in particular a robot arm, to a change-over adapter (5), and
- the change-over adapter (5), which is detachably connected to the change-over coupling (1), the change-over coupling (1) comprising:
- a clamping element (3) for clamping with a corresponding clamping element (4) on the change-over adapter (5),
- at least one electrical (6a, 6b, 6c, 6d) and/or optical plug-in connection element (7) for connecting to at least one corresponding electrical (14a, 14b, 14c, 14d) and/or optical plug-in connection element (15) on the change-over adapter (5),
- the change-over coupling (1) comprising two water coupling elements (8a, 8b) for connecting to two corresponding water coupling elements (29a, 29b) on the change-over adapter (5),
- **characterised in that** the water coupling elements (8a, 8b) project further in the direction of the connection to the change-over adapter (5) than the electrical (6a, 6b, 6c, 6d) and/or optical (7) plug-in connection element, such that the electrical (6a, 6b, 6c, 6d) and/or optical plug-in connection element (7) and the corresponding electrical (14a, 14b, 14c, 14d) and/or optical plug-in connection element (15) on the change-over adapter (5) are aligned with one another before they meet, as a result of the connection of the water coupling elements (8a, 8b) to the corresponding water coupling elements (29a, 29b) on the change-over adapter (5).

2. Change-over device (26) according to claim 1, **characterised in that** the change-over coupling (1) comprises an anti-rotation element for connecting to a corresponding anti-rotation element on the change-over adapter (5), a connection pin (12a, 12b) that tapers in the direction of the connection to the change-over adapter (5) preferably being provided as the anti-rotation element, and a pin receptacle (13a, 13b) being provided as the corresponding anti-rotation element on the change-over adapter (5).

3. Change-over device (26) according to claim 2, **characterised in that** the water coupling elements (8a, 8b) are at a greater radial distance from the clamping element (3) than the anti-rotation element.

4. Change-over device (26) according to any of claims 1 to 3, **characterised in that** the change-over coupling (1) comprises a sealing ring (16) for sealing connection to the change-over adapter (5), the sealing ring (16) preferably having a V-shaped cross section.

5. Change-over device (26) according to claim 4, **characterised in that** the sealing ring (16) is arranged on an outer edge (17) of a preferably cylindrical main body (2) of the change-over coupling (1).

6. Change-over device (26) according to either claim 4 or claim 5, **characterised in that** the electrical (6a, 6b, 6c, 6d) and/or optical plug-in connection element (7) and the water coupling elements (8a, 8b) are each arranged inside the sealing ring (16) in the radial direction.

7. Change-over device (26) according to any of claims 1 to 6, **characterised in that** the change-over coupling (1) comprises a first recess (19a, 19b, 19c, 19d, 19e) for the detachable arrangement of the electrical (6a, 6b, 6c, 6d) and/or optical plug-in connection element (7) and/or a second recess (19f, 19g) for the detachable arrangement of the water coupling elements (8a, 8b).

8. Change-over device (26) according to any of claims 1 to 7, **characterised in that** at least one electrical plug-in connection element (6a) comprises high-voltage or high-current contacts and/or at least one electrical plug-in connection element (6b, 6c) comprises highfrequency contacts and/or at least one electrical plug-in connection element (6d) has a high number of poles.

9. Change-over device (26) according to any of claims 1 to 8, **characterised in that** at least one electrical plug-in connection element (6b) comprises contacts for transmitting a supply voltage from the handling element (28) to the change-over adapter (5).

10. Change-over device (26) according to any of claims 1 to 9, **characterised in that** at least one electrical plug-in connection element (6b) comprises contacts for transmitting data, in particular for transmitting a tool identification and/or analog and/or digital sensor data, from the change-over adapter (5) to the handling element (28).

11. Change-over device (26) according to any of claims 1 to 10, **characterised in that** at least one optical plug-in connection element (7) comprises an optical waveguide.

12. Change-over device (26) according to any of claims 1 to 11, **characterised by** a central piece (20) on the side facing the handling element (28), which central piece has a connecting element (21a, 21b, 21c, 21d, 21e, 21f, 21g, 21h, 21i, 21j) for connecting a line to the handling element (28).

13. Change-over device (26) according to claim 12, **characterised in that** the connecting element (21a, 21b, 21c, 21d, 21e, 21f, 21g, 21h, 21i, 21j) projects outwards from the central piece (20) in the radial direction.

14. Testing or processing system (27), in particular for non-destructive testing of a component, preferably a fibre-plastics composite component, comprising:
- a handling element (28), in particular a robot arm,
- a change-over device (26) according to any of claims 1 to 13, wherein the change-over adapter (5) is detachably connected to the handling element (28) via the change-over coupling (1).

## Revendications

1. Dispositif de changement (26), en particulier pour le contrôle non destructif d'un composant, de préférence un composant composite fibre-plastique, présentant:
- un accouplement de changement (1) pour la liaison d'un élément de manipulation (28), en particulier un bras de robot, avec un adaptateur de changement (5), et
- l'adaptateur de changement (5), qui est relié à l'accouplement de changement (1) de manière amovible, où l'accouplement de changement (1) présente:
- un élément de serrage (3) pour le serrage avec un élément de serrage (4) correspondant sur l'adaptateur de changement (5),
- au moins un élément de liaison enfichable électrique (6a, 6b, 6c, 6d) et/ou optique (7) pour la liaison avec au moins un élément de liaison enfichable électrique (14a, 14b, 14c, 14d) et/ou optique (15) correspondant sur l'adaptateur de changement (5),
- où l'accouplement de changement (1) présente deux éléments d'accouplement d'eau (8a, 8b) pour la liaison avec deux éléments d'accouplement d'eau (29a, 29b) correspondants sur l'adaptateur de changement (5),
- **caractérisé en ce que** les éléments d'accouplement d'eau (8a, 8b) dépassent davantage dans la direction de la liaison avec l'adaptateur de changement (5) que l'élément de liaison enfichable électrique (6a, 6b, 6c, 6d) et/ou optique (7), de sorte que l'élément de liaison enfichable électrique (6a, 6b, 6c, 6d) et/ou optique (7) et l'élément de liaison enfichable électrique (14a, 14b, 14c, 14d) et/ou optique (15) correspondant sur l'adaptateur de changement (5) sont alignés les uns avec les autres avant de se rencontrer par la liaison des éléments d'accouplement d'eau (8a, 8b) avec les éléments d'accouplement d'eau (29a, 29b) correspondants sur l'adaptateur de changement (5).

2. Dispositif de changement (26) selon la revendication 1, **caractérisé en ce que** l'accouplement de changement (1) présente un élément anti-rotation pour la liaison avec un élément anti-rotation correspondant sur l'adaptateur de changement (5), où de préférence un tenon de liaison (12a, 12b) aminci en direction de la liaison avec l'adaptateur de changement (5) est prévu comme élément anti-rotation et un logement de tenon (13a, 13b) est prévu comme élément anti-rotation correspondant sur l'adaptateur de changement (5).

3. Dispositif de changement (26) selon la revendication 2, **caractérisé en ce que** les éléments d'accouplement d'eau (8a, 8b) présentent une distance radiale à l'élément de serrage (3) plus grande que l'élément anti-rotation.

4. Dispositif de changement (26) selon l'une des revendications 1 à 3, **caractérisé en ce que** l'accouplement de changement (1) présente une bague d'étanchéité (16) pour la liaison étanche avec l'adaptateur de changement (5), où la bague d'étanchéité (16) présente de préférence une section transversale en forme de V.

5. Dispositif de changement (26) selon la revendication 4, **caractérisé en ce que** la bague d'étanchéité (16) est disposée sur un bord extérieur (17) d'un corps de base (2) de préférence cylindrique de l'accouplement de changement (1).

6. Dispositif de changement (26) selon la revendication 4 ou 5, **caractérisé en ce que** l'élément de liaison enfichable électrique (6a, 6b, 6c, 6d) et/ou optique (7) et les éléments d'accouplement d'eau (8a, 8b) sont disposés chacun dans la direction radiale à l'intérieur de la bague d'étanchéité (16).

7. Dispositif de changement (26) selon l'une des revendications 1 à 6, **caractérisé en ce que** l'accouplement de changement (1) présente un premier évidement (19a, 19b, 19c, 19d, 19e) pour la disposition amovible de l'élément de liaison enfichable électrique (6a, 6b, 6c, 6d) et/ou optique (7) et/ou un deuxième évidement (19f, 19g) pour la disposition amovible des éléments d'accouplement d'eau (8a, 8b).

8. Dispositif de changement (26) selon l'une des revendications 1 à 7, **caractérisé en ce qu'**au moins un élément de liaison enfichable électrique (6a) présente des contacts à haute tension ou à courant fort et/ou au moins un élément de liaison enfichable électrique (6b, 6c) présente des contact à haute fréquence et/ou au moins un élément de liaison enfichable électrique (6d) a un nombre élevé de pôles.

9. Dispositif de changement (26) selon l'une des revendications 1 à 8, **caractérisé en ce qu'**au moins un élément de liaison enfichable électrique (6b) présente des contacts pour la transmission d'une tension d'alimentation de l'élément de manipulation (28) à l'adaptateur de changement (5).

10. Dispositif de changement (26) selon l'une des revendications 1 à 9, **caractérisé en ce qu'**au moins un élément de liaison enfichable électrique (6b) présente des contacts pour la transmission de données, en particulier pour la transmission d'une identification d'outil et/ou de données de capteur analogiques et/ou numériques, de l'adaptateur de changement (5) à l'élément de manipulation (28).

11. Dispositif de changement (26) selon l'une des revendications 1 à 10, **caractérisé en ce qu'**au moins un élément de liaison enfichable optique (7) présente un guide d'ondes optiques.

12. Dispositif de changement (26) selon l'une des revendications 1 à 11, **caractérisé par** une pièce centrale (20) sur le côté tourné vers l'élément de manipulation (28) avec un élément de raccordement (21a, 21b, 21c, 21d, 21e, 21f, 21g, 21h, 21i, 21j) pour le raccordement d'une conduite sur l'élément de manipulation (28).

13. Dispositif de changement (26) selon la revendication 12, **caractérisé en ce que** l'élément de raccordement (21a, 21b, 21c, 21d, 21e, 21f, 21g, 21h, 21i, 21j) fait saillie de la pièce centrale (20) vers l'extérieur dans la direction radiale.

14. Système de contrôle ou de traitement (27), en particulier pour le contrôle non destructif d'un composant, de préférence un composant composite fibre-plastique, présentant:
- un élément de manipulation (28), en particulier un bras de robot,
- un dispositif de changement (26) selon l'une des revendications 1 à 13, où l'adaptateur de changement (5) est relié de manière amovible à l'élément de manipulation (28) par le biais de l'accouplement de changement (1).
